# EUROPEAN PATENT APPLICATION

(11) **EP 1 606 996 A1**
(43) Date of publication of application: **21.12.2005**
(21) Application number: 05012385.0
(22) Date of filing: 09.06.2005
(51) Int. Cl.: A01K 63/00, A01K 63/04, A01K 63/06

(54) **Aquarium arrangement**

(30) Priority: 15.06.2004 US 868749; 22.03.2005 US 87327
(71) Applicant: Tetra Holding (US), Inc., Blacksburg Virginia 24060 (US)
(72) Inventor: Agresta, Mark G., Blacksburg, Virginia 24060 (US)
(74) Representative: Miller, Andreas

(57) **Abstract**

A decorative aquarium arrangement (10) including a decorative structure (12) for use in concealing a filter assembly (14) and a heater (16). The decorative structure including an inlet and an outlet. The inlet (38) and the outlet (40) are relatively located to create a diagonal circulation of aquarium water within an aquarium to reduce stagnant regions within the aquarium. The heater (16) is further positioned in relation to the filter assembly such that heated, filtered water is dispensed by the decorative aquarium arrangement.

## Description

This application is based on the US-application Ser. No 10,868.749, filed on June 15, 2004, the priority of which is claimed herewith and which is characterized by the following:
1. A decorative arrangement for use in concealing aquarium equipment within an aquarium, the decorative arrangement comprising:
   a) a decorative structure including a structure inlet and a structure outlet, the structure inlet being located a vertical distance from the structure outlet and a horizontal distance from the structure outlet, the horizontal distance being at least half as great as the vertical distance to create a diagonal circulation of aquarium water when aquarium water is' circulated through the decorative structure.
2. The arrangement of claim 1, wherein the diagonal circulation of aquarium water created by the horizontal and vertical distances between the structure inlet and the structure outlet reduces stagnant water regions within the aquarium.
3. The arrangement of claim 1, wherein the decorative structure defines a cavity, the cavity being configured to conceal a filter assembly positioned within the cavity.
4. The arrangement of claim 3, wherein the cavity is configured to conceal a heater positioned within the cavity.
5. The arrangement of claim 1, wherein the structure inlet includes a plurality of openings formed in a side wall of the structure.
6. The arrangement of claim 1, wherein the structure outlet is defined by a spillway.
7. An aquarium arrangement, comprising:
   a) an aquarium;
   b) a filter assembly having a filter assembly inlet and a filter assembly outlet; and
   c) a decorative structure having a structure inlet and a structure outlet, the decorative structure being configured to conceal the filter assembly;
   d) wherein the filter assembly is positioned in relation to the structure inlet of the decorative structure such that a substantially horizontal flow of water is created between the structure inlet and the filter assembly inlet.
8. The arrangement of claim 7, wherein the structure inlet is positioned relative to the structure outlet to provide a fluid flow within the aquarium that has a side-to-side flow component to reduce stagnant water regions within the aquarium.
9. The arrangement of claim 7, further including a heater positioned in close proximity to the filter assembly such that water flowing into the filter assembly is heated immediately prior to entering the filter assembly inlet.
10. The arrangement of claim 9, wherein the decorative structure defines a cavity, the filter assembly and heater being positioned within the cavity.
11. The arrangement of claim 7, wherein the decorative structure extends at least 25 percent of a distance defined between sides of the aquarium.
12. The arrangement of claim 11, wherein the decorative structure extends a majority of a distance defined between sides of the aquarium.
13. The arrangement of claim 7, wherein the filter assembly outlet is located at the structure outlet.
14. The arrangement of claim 13, wherein the structure outlet is arranged such that filtered water exits the decorative structure at a location approximately level with a water level of the aquarium.
15. The arrangement of claim 13, wherein the structure outlet is arranged such that filtered water exits the decorative structure at a location above a water level of the aquarium.
16. The arrangement of claim 13, wherein the water exiting the structure outlet creates a ripple effect upon the water contained within the aquarium.
17. The arrangement of claim 7, wherein the structure inlet includes a plurality of openings formed in a wall of the structure.
18. The arrangement of claim 17, wherein the plurality of openings is located within a side wall of the structure.
19. The arrangement of claim 17, wherein the plurality of openings is defined by a grill insert secured to the decorative structure.
20. The arrangement of claim 17, further including a heater positioned between the plurality of openings and the filter assembly to heat water flowing in through the openings prior to filtration.
21. The arrangement of claim 7, wherein the filter assembly includes a submersible pump and a filter housing.
22. The arrangement of claim 21, wherein the filter assembly outlet is defined by a spillway formed in the filter housing.
23. The arrangement of claim 7, wherein the structure outlet is defined by a spillway.
24. An aquarium arrangement, comprising:
   a) a decorative structure having a front side and a back side;
   b) a filter assembly positioned at the back side of the decorative structure, the filter assembly having a filter assembly inlet and a filter assembly outlet; and
   c) a heater positioned in close proximity to the filter assembly inlet such that water is heated immediately prior to entering the filter assembly inlet during operation of the filter assembly.
25. The arrangement of claim 24, wherein the decorative structure is sized to conceal each of the filter assembly and heater.
26. The arrangement of claim 24, wherein the decorative structure includes a structure inlet and a structure outlet, the filter assembly outlet being located at the structure outlet.
27. The arrangement of claim 26, wherein the structure inlet includes a plurality of openings formed in the structure.
28. The arrangement of claim 27, wherein the plurality of openings of the structure inlet is defined by a grill piece.
29. The arrangement of claim 26, wherein the filter assembly inlet of the filter assembly is positioned a distance from the structure inlet to create a substantially horizontal flow of water between the structure inlet and the filter assembly inlet.
30. The arrangement of claim 29, wherein the structure inlet is positioned relative to the structure outlet to provide a fluid flow within an aquarium that has a side-to-side flow component to reduce stagnant water regions within the aquarium.
31. The arrangement of claim 29, wherein the heater is positioned within the horizontal flow of water.
32. The arrangement of claim 24, wherein the filter assembly outlet is defined by a spillway.
33. A method of circulating aquarium water within an aquarium, the method comprising the steps of:
   providing a decorative structure positioned within the aquarium, the decorative structure including an inlet and an outlet, and defining a cavity configured to conceal aquarium equipment;
   positioning a pump within the cavity of the decorative structure; and
   creating a diagonal water flow path through the aquarium by operating the pump, the diagonal water flow path being created by the relative positions of the inlet and the outlet of the decorative structure to reduce stagnant water regions within the aquarium.
34. The method of claim 33, further including heating water at a location between the inlet and the outlet of the decorative structure.
35. The method of claim 34, further including filtering the heated water.
36. The method of claim 34, further including providing a heater and a filter assembly, and positioning the heater in close proximity to the filter assembly such that water drawn through the structure inlet is heated immediately prior to filtration.
37. The method of claim 36, further including positioning the filter assembly and heater behind the decorative structure to conceal the filter assembly and heater.
38. The method of claim 33, wherein a portion of the diagonal water flow is provided by returning heated and filtered water from the structure outlet to a primary volume of the aquarium.
39. The method of claim 38, wherein the step of returning the heated and filtered water includes dispensing the heated and filtered water at a location above a surface level of the aquarium water.
40. The method of claim 38, wherein the step of returning the heated and filtered water includes dispensing the heated and water at a location at a surface level of the aquarium water.
41. The method of claim 38, wherein the step of returning the heated and filtered water includes creating a ripple effect at a surface level of the aquarium water.
42. The arrangement of claim 33, wherein the outlet of the decorative structure is defined by a spillway.

### Technical Field

This disclosure relates generally to decorative structures for use with aquariums. In particular, this disclose relates to a decorative structure configured to conceal a filter assembly and heater.

### Background

A wide variety of aquarium décor is available for use in enhancing the beauty and enjoyment of an aquarium. In some applications, the aquarium décor is used to conceal aquarium accessories such as circulating conduits, aeration conduits, filter assemblies, heaters, or other accessories. These accessories are generally associated with maintaining a healthy environment for aquatic life within the aquarium. For example, these types of accessories are important to maintaining proper temperature regulation, water circulation, and water filtration. While aquarium décor adds aesthetic value to an aquarium, use of décor to conceal aquarium components can hinder the effectiveness of the components needed to maintain a healthy aquatic environment.

In general, improvement has been sought with respect to such arrangements and methods, generally to improve the aesthetic quality of an aquarium while still maintaining, and even enhancing the effectiveness of components associated with the environmental quality of the aquarium.

### Summary

The present invention concerns a decorative aquarium arrangement having a decorative structure for use in concealing a filter assembly and a heater. The decorative structure has a front side and a back side, the back side defining a cavity within which the filter assembly and the heater are positioned. The decorative structure also includes an inlet and an outlet. One feature of the arrangement relates to the offset position of the inlet and the outlet, which creates a diagonal circulation of aquarium water within an aquarium. Another feature of the arrangement relates to the proximate position of the heater in relation to the filter assembly, which thereby dispenses heated filtered water via a spillway to the primary volume of water of the aquarium.

A variety of examples of desirable product features or methods are set forth in part in the description that follows, and in part will be apparent from the description, or may be learned by practicing various aspects of the disclosure. The aspects of the disclosure may relate to individual features as well as combinations of features. It is to be understood that both the foregoing general description and the following detailed description are explanatory only, and are not restrictive of the claimed invention.

### Brief Description of the Drawings

FIG. 1 is a front perspective view of one embodiment of an aquarium décor arrangement, according to the principles of the present disclosure, shown positioned in an aquarium;
FIG. 2 is a front perspective view of the aquarium arrangement of FIG. 1;
FIG. 3 is a rear perspective view of the aquarium arrangement of FIG. 2;
FIG. 4 is a front elevation view of the aquarium arrangement of FIG. 2;
FIG. 5 is a top plan view of the aquarium arrangement of FIG. 2;
FIG. 6 is a side elevation view of the aquarium arrangement of FIG. 2;
FIG. 7 is a back elevation view of the aquarium arrangement of FIG. 2;
FIG. 8 is a bottom plan view of the aquarium arrangement of FIG. 2;
FIG. 9 is a front perspective view of another embodiment of an aquarium décor arrangement, according to the principles of the present disclosure;
FIG. 10 is a rear perspective view of the aquarium arrangement of FIG. 9;
FIG. 11 is a front elevation view of the aquarium arrangement of FIG. 9;
FIG. 12 is a back elevation view of the aquarium arrangement of FIG. 9;
FIG. 13 is a bottom plan view of the aquarium arrangement of FIG. 9;
FIG. 14 is a front perspective view of yet another embodiment of an aquarium décor arrangement, according to the principles of the present disclosure;
FIG. 15 is a rear perspective view of the aquarium arrangement of FIG. 14;
FIG. 16 is a front elevation view of the aquarium arrangement of FIG. 14;
FIG. 17 is a top plan view of the aquarium arrangement of FIG. 14;
FIG. 18 is a back elevation view of the aquarium arrangement of FIG. 14;
FIG. 19 is a bottom plan view of the aquarium arrangement of FIG. 14;
FIG. 20 is a front perspective view of still another embodiment of an aquarium decor arrangement, according to the principles of the present disclosure;
FIG. 21 is a rear perspective view of the aquarium arrangement of FIG. 20 and shows a back panel of the arrangement;
FIG. 22 is a back elevation view of the aquarium arrangement of FIG. 21, shown with the back panel removed;
FIG. 23 is a front elevation view of the aquarium arrangement of FIG. 20; and
FIG. 24 is a side elevation view of the aquarium arrangement of FIG. 20.

### Detailed Description

Reference will now be made in detail to various features of the present disclosure that are illustrated in the accompanying drawings. Wherever possible, the same reference numbers will be used throughout the drawings to refer to the same or like parts.

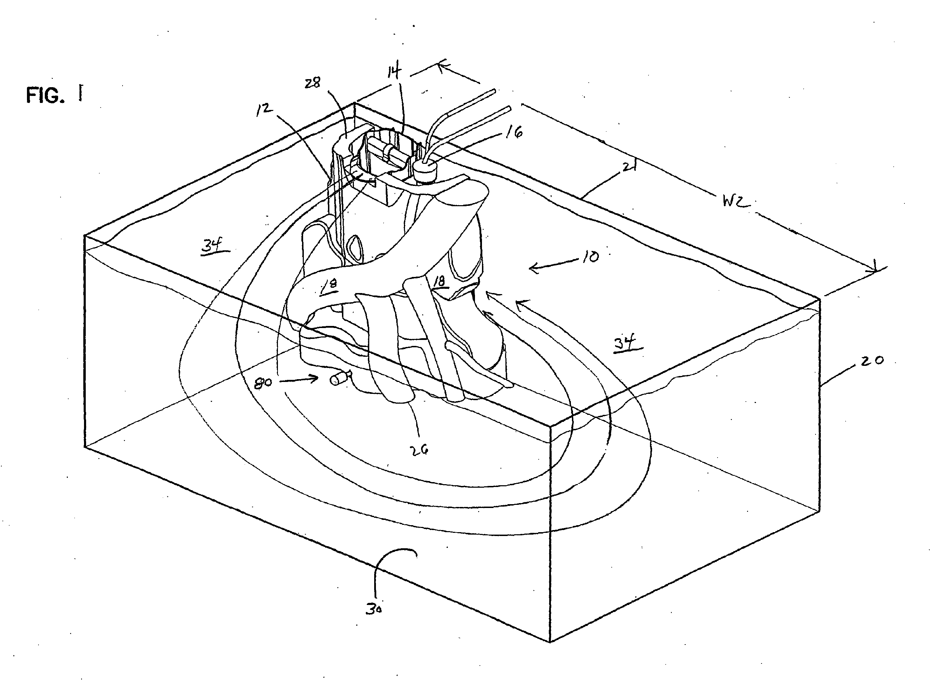

FIGS. 1-8 illustrate one embodiment of an aquarium décor arrangement 10 in accord with the principles of the present disclosure. The aquarium arrangement 10 is typically placed within an aquarium or tank 20. In the illustrated embodiment, the aquarium arrangement 10 includes a decorative structure 12, a filter assembly 14, and a heater 16.

The aquarium arrangement 10 is constructed and arranged such that a diagonal circulation of water flow (shown in FIG. 1) is created within the aquarium 20 when aquarium water is circulated through the arrangement 10. Water circulation generated by conventional arrangements typically involves an up and down flow circulation in contrast to a circulation having a side-to-side flow component. The present arrangement 10 is designed to generate a side-to-side flow component sufficient to create the diagonal circulation of water within an aquarium and thereby reduce stagnant water regions within the aquarium. In conventional arrangements, stagnant water regions are a common problem because the up and down circulation tends to produce such circulation in only portions or isolated regions of the aquarium. As will be discussed in greater detail hereinafter, the diagonal circulation provided by the present arrangement has an effect on a larger majority of a volume of water contained with an aquarium. Thereby, the diagonal circulation of the present arrangement 10 reduces the occurrence of stagnant water regions.

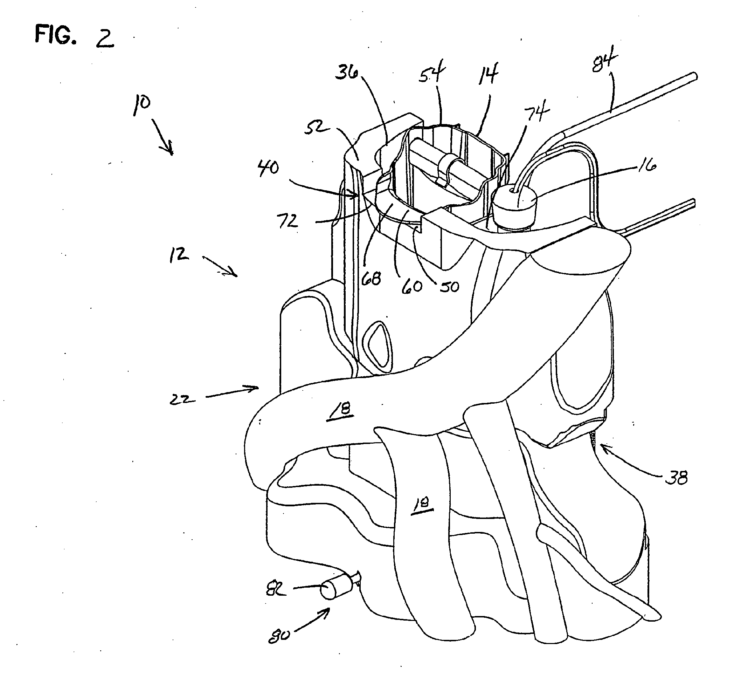

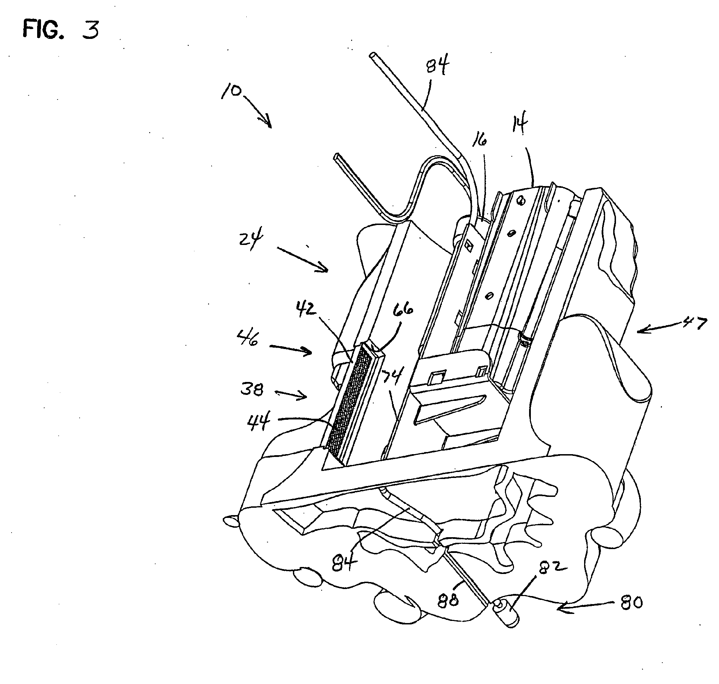

Referring now to FIGS. 2 and 3, the decorative structure 12 of the arrangement 10 has a front side or surface 22 and a back side or surface 24. The front side 22 typically includes features or structures 18 designed to make the aquarium's appearance more natural, beautiful, and enjoyable. In the illustrated embodiment of FIGS. 1-8, the features of the decorative structure 12 are designed in the form of underwater roots. In other embodiments shown in FIGS. 9-13 and FIGS. 20-24, the features are designed in the form of an underwater stump; and in FIGS. 14-19, the features are designed in the form of another underwater root system. Other designs that enhance the appearance of an aquarium are within the scope of the present disclosure. For example, the features 18 can be in the form or coral or other underwater structures.

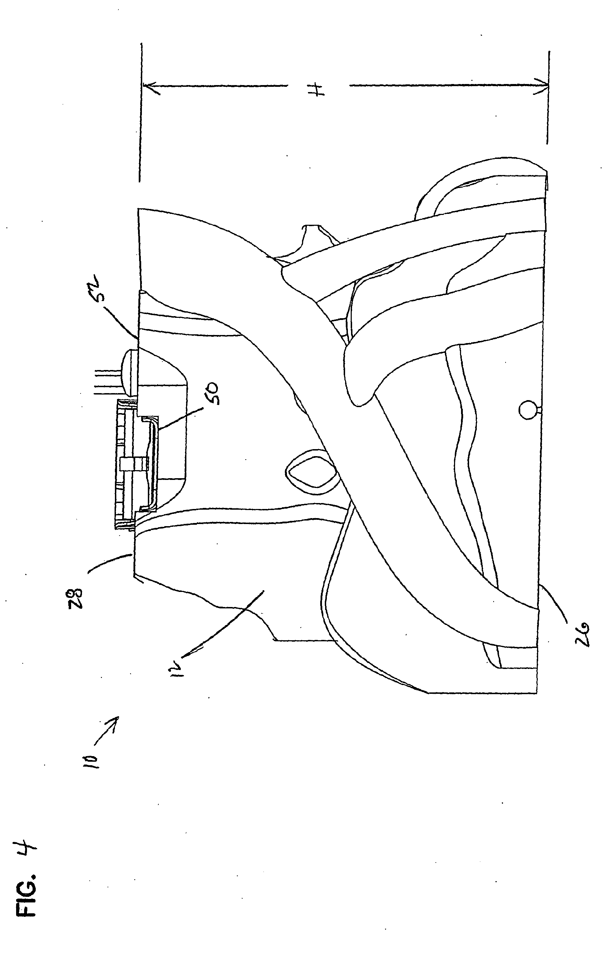

Referring now to FIGS. 1 and 4, the decorative structure 12 has a first end 26 and a second end 28. When positioned within an aquarium 20, preferably the first end 26 of the structure 12 rests upon a bottom 30 (FIG. 1) of the aquarium 20. Positioning the structure 12 to rest upon the bottom 30 of the aquarium 20 includes placing the first end 26 of the structure 12 on a bottom surface of the aquarium, on a gravel layer at the bottom of the aquarium, on a liner positioned at the bottom of the aquarium, or on other structure located at the lower or bottom region of the aquarium.

The second end 28 of the structure 12 is preferably located above the waterline of the aquarium 20 (FIG. 1) when the first end 26 of the structure 12 rests upon the bottom 30. In general, the structure 12 has a height H that extends from the first end 26 to the second end 28; the height H is sized so that the second end 28 of the structure 12 extends out of the water to provide easy access to the filter assembly 14 and the heater 16 when the arrangement 10 is positioned within the aquarium 20. In some embodiments, the height H corresponds to a full height of the aquarium 20.

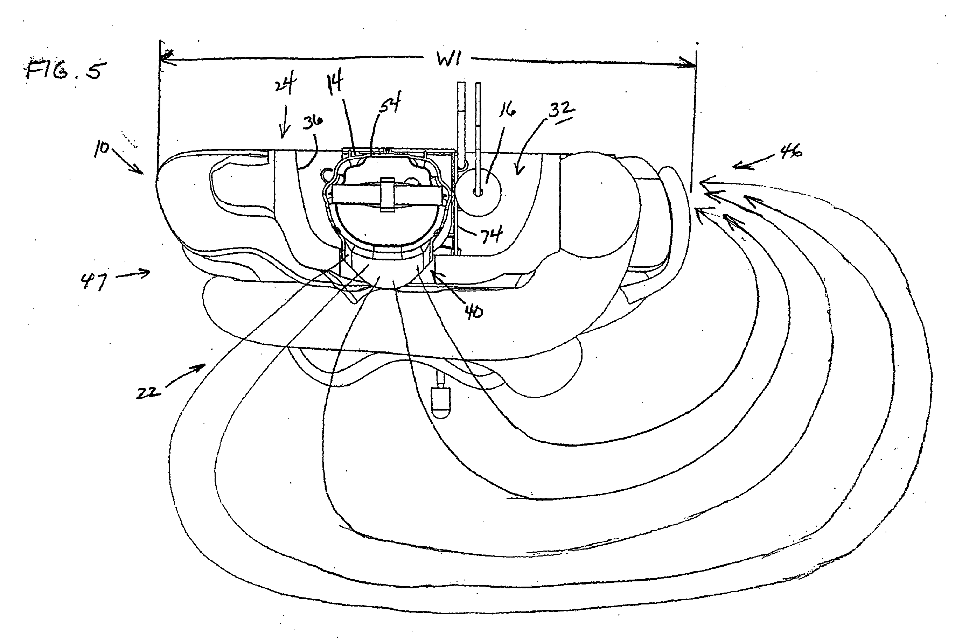

Referring now to FIGS. 3 and 5, the back side 24 of the decorative structure 12 defines a volume or cavity 32 that is separate from a primary volume 34 (FIG. 1) of the aquarium 20. A top opening 36 at the second end 28 of the structure 12 provides access to the cavity 32 defined by the back side 24 when the structure 12 is positioned adjacent a back wall 21 of an aquarium 20. In the illustrated embodiment, the cavity 32 is formed by a curved contour of the back side 24 and first and second side walls 46, 47 of the decorative structure 12. The cavity 32 is configured to conceal the filter assembly 14 and the heater 16 when positioned within the cavity. Preferably, both the filter assembly 14 and the heater 16 are internal to the aquarium 20, rather than, for example, an arrangement having a filter assembly that is mounted outside of the aquarium.

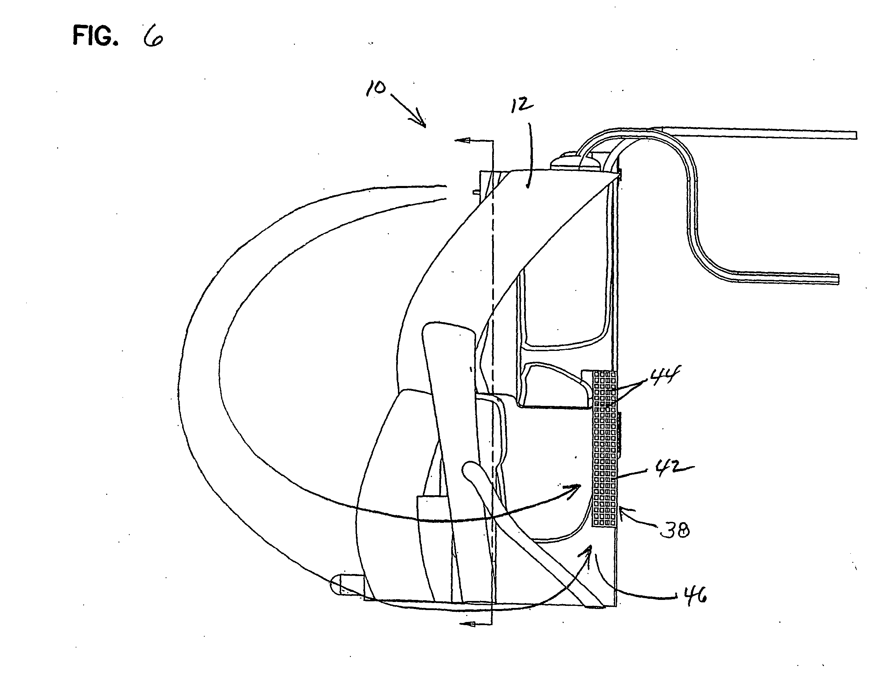

Referring now to FIGS. 5 and 6, the decorative structure 12 defines a water circulation inlet 38 and a water circulation outlet 40. The inlet 38 provides fluid communication from the primary volume 34 of the aquarium 20 to the cavity 32 located behind the structure 12. The outlet 40 provides fluid communication from the cavity 32 of the structure 12 to the primary volume 34 of the aquarium 20.

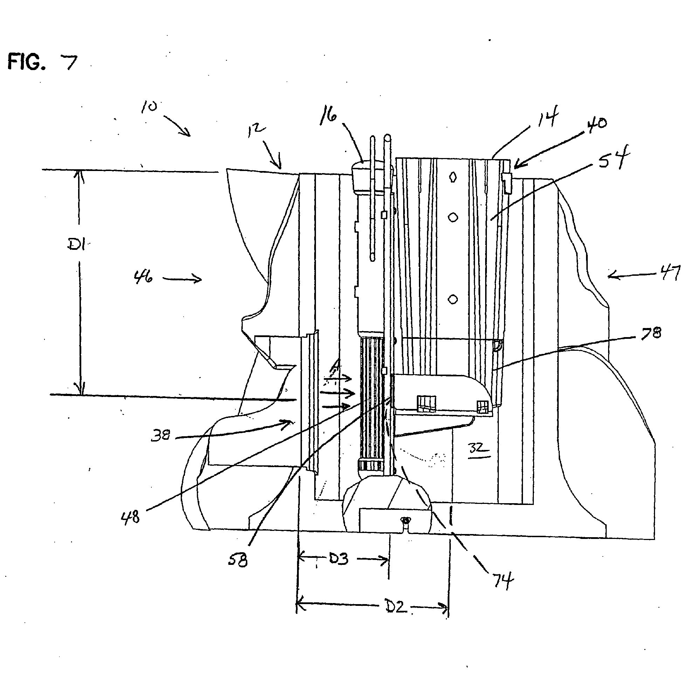

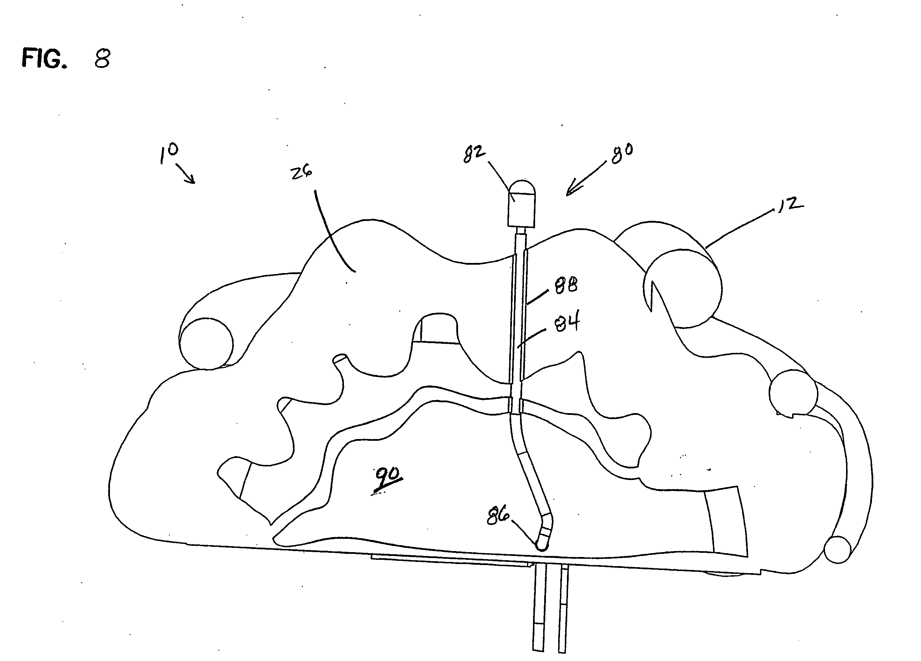

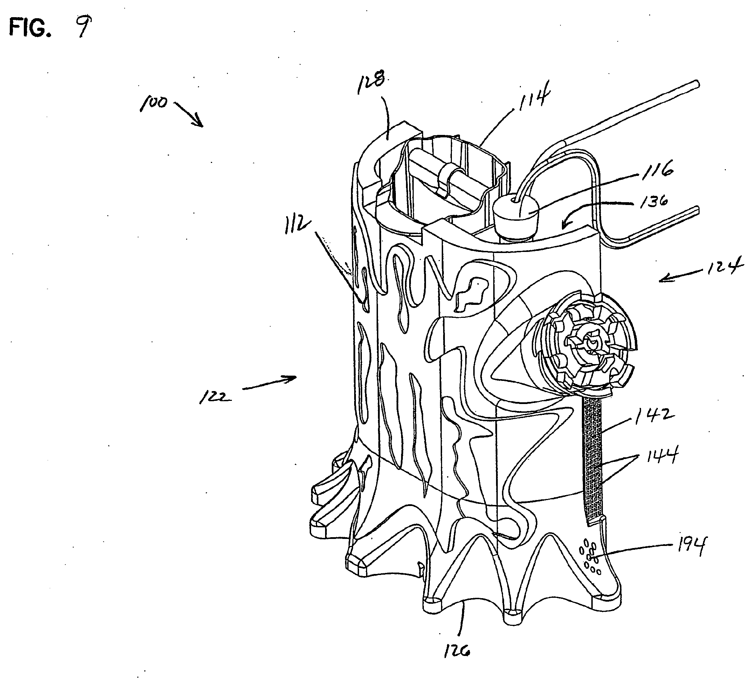

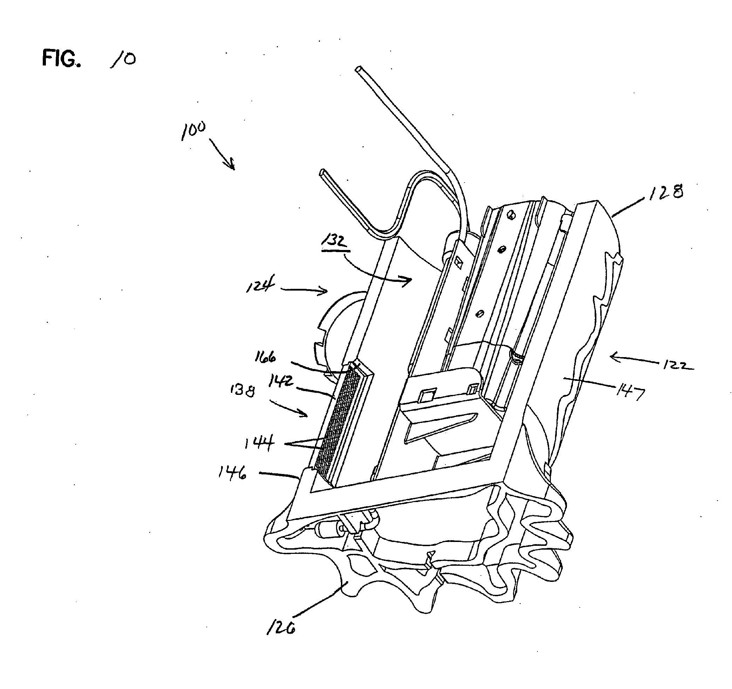

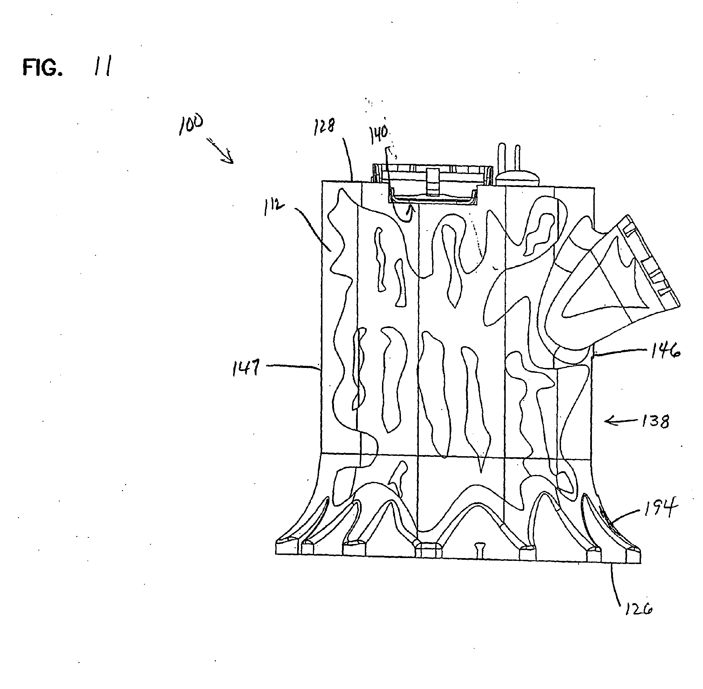

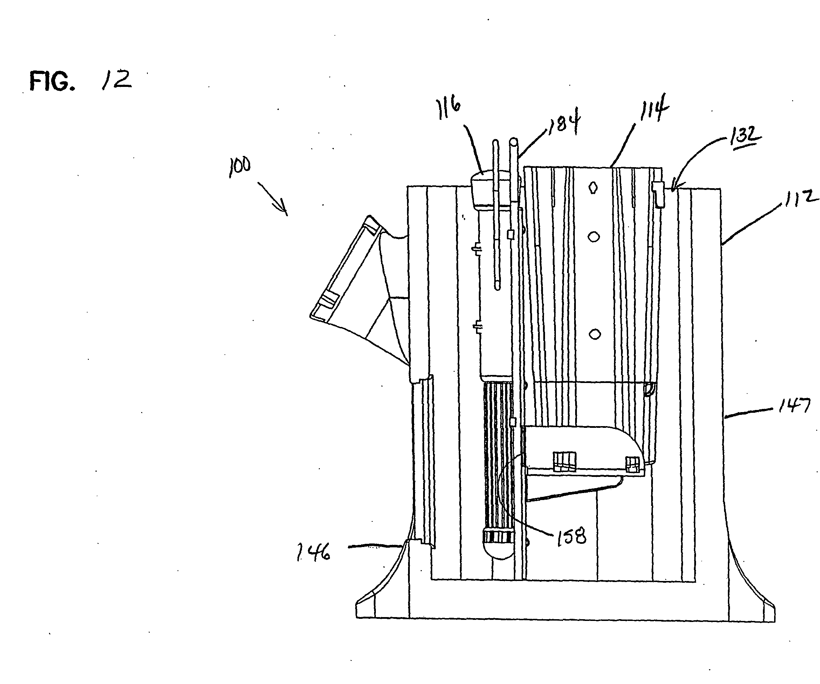

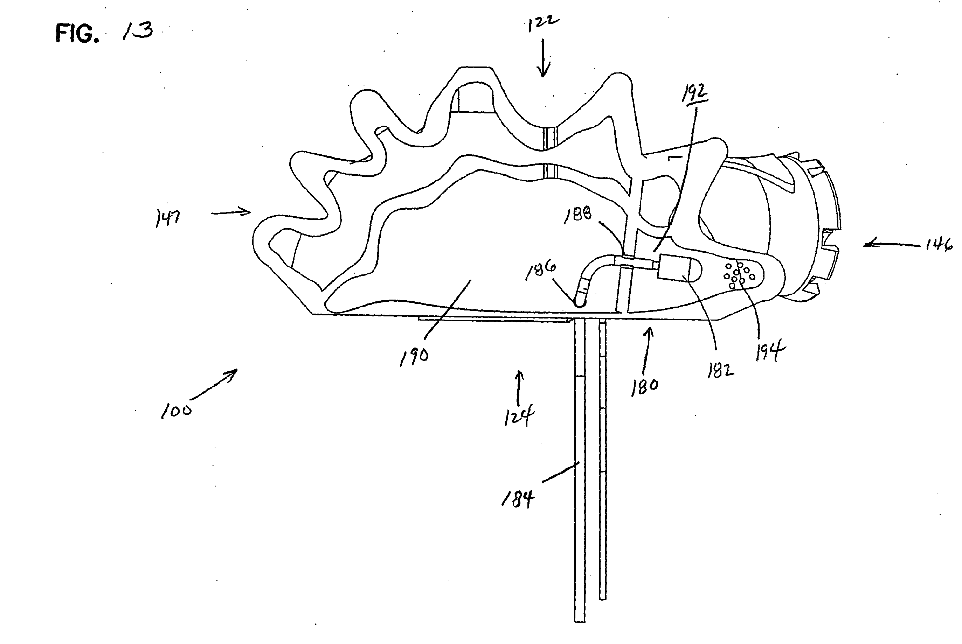

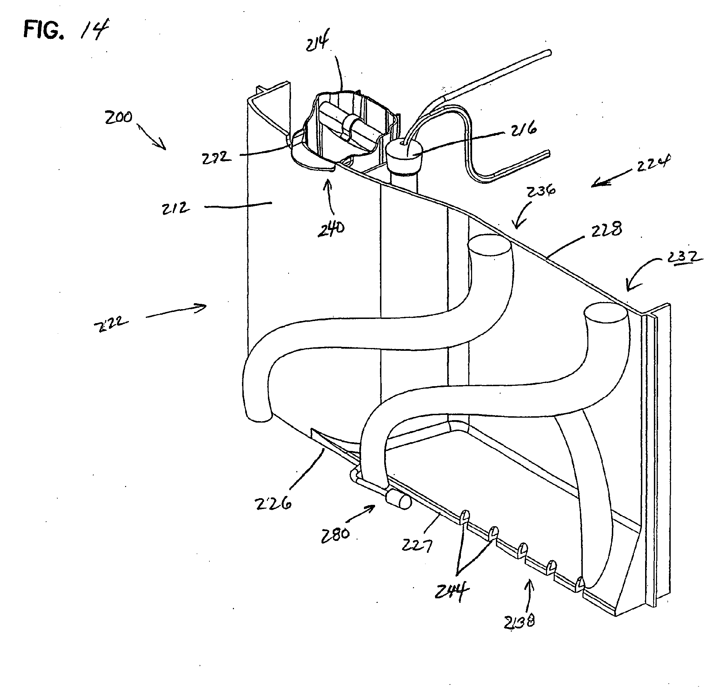

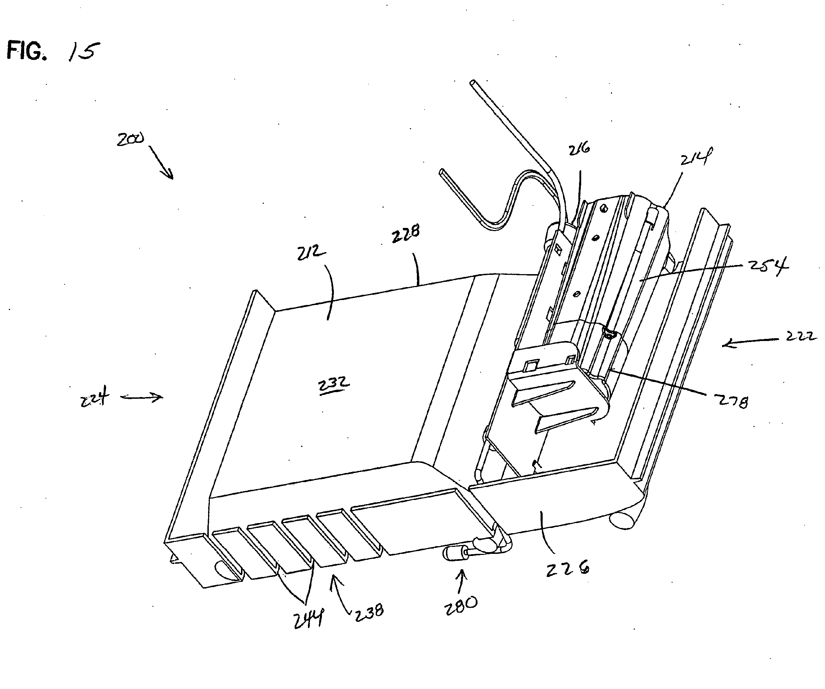

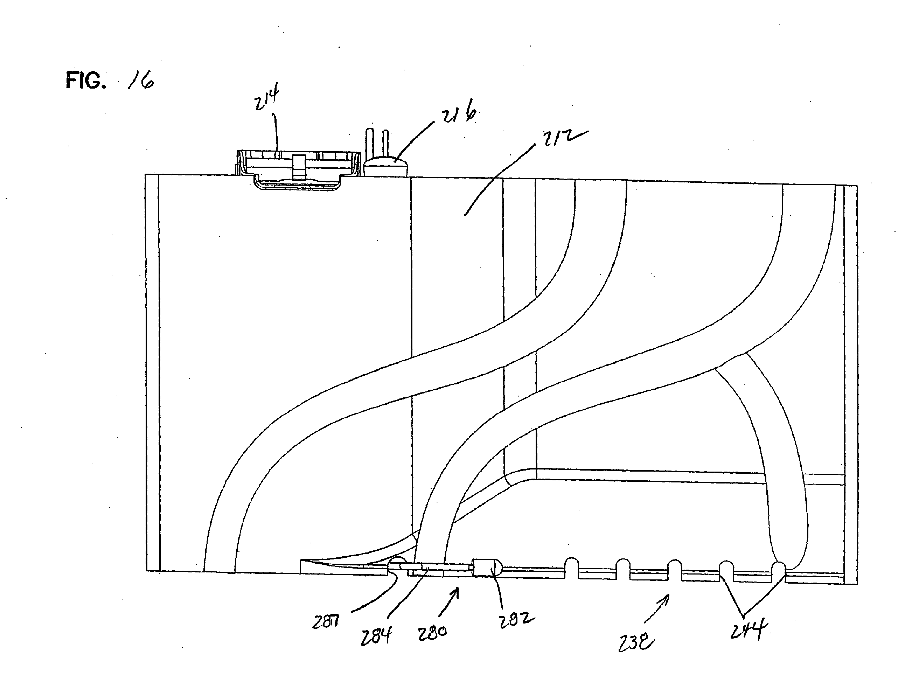

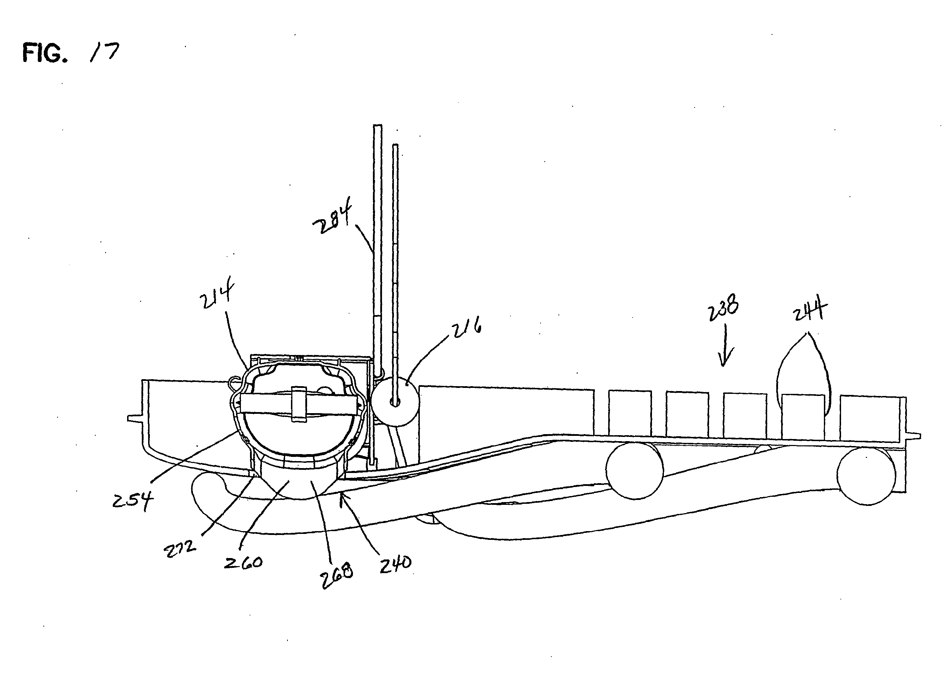

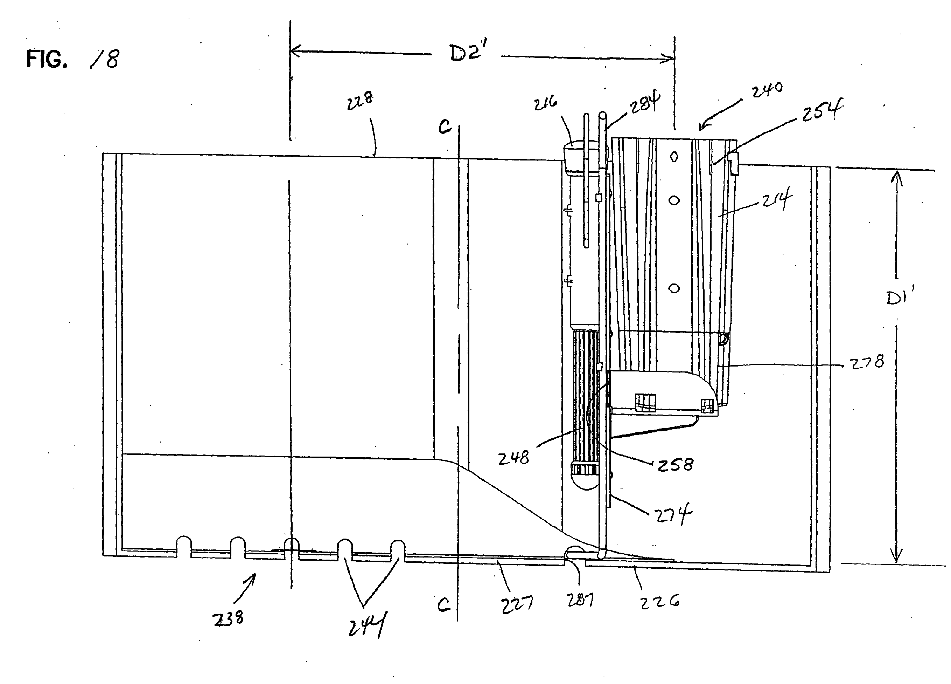

Referring back to FIG. 2, the outlet 40 of the structure 12 is generally a location 72 at which water exits the decorative structure 12. In other words, the outlet 40 typically is defined by the location 72 at which the filter assembly 14 is positioned, and does not require a particular structurally-defined outlet. The filter assembly 14 generally includes a submersible pump 78 (FIG. 7) defining a filter assembly inlet 58, and a filter housing 54 defining a filter assembly outlet 60 (FIG. 2). The filter assembly outlet 60 in the illustrated embodiment is a spillway 68. A spillway is generally an edge, ledge or surface over which water flows, in contrast to a port, for example. The location 72 at which the spillway 68 is positioned at least partially defines the outlet 40 of the decorative structure 12 in the embodiment of FIGS. 1-8.

Although no particular structurally-defined outlet is required by the present disclosure, in the illustrated embodiment, the outlet 40 is also partially defined by a recessed lip 50 (FIGS. 2 and 3) formed along a top edge 52 of the decorative structure 12. The lip 50 is sized to accommodate the spillway 68 of the filter assembly 14. Other embodiments may or may not include specific structure corresponding to the configuration of the filter assembly 14. It is further contemplated that the water circulation outlet 40 may include, for example, channels, openings, or other outlet structures that direct water back into the primary volume 34 of the aquarium. During operation, water is returned to the primary volume 34 of the aquarium 20 at the location 72 of the lip 50. In particular, water exits the spillway 68 formed in the filter housing 54 of the filter assembly 14, which is positioned at the lip 50 of the decorative structure 12.

Preferably, the location 72 at which water is dispensed from the arrangement 10 to the primary volume 34 of the aquarium 20 is located at a surface level of the water within the aquarium. Water exiting the structure 12 at the surface level of the aquarium water creates a ripple effect on the surface of the water. The ripple effect increases the oxygen level of the aquarium water to aid in maintaining a healthy aquatic environment. Alternatively, the location 72 at which water is dispensed from the arrangement may be located above the surface level of the water within the aquarium to create a waterfall effect. Similarly, it is contemplated that water may be dispensed from the arrangement 10 at a location below the surface level of the aquarium water.

Referring back to FIGS. 3 and 6, the inlet 38 of the structure 12 includes at least one opening, preferably a plurality of openings 44, formed in one of the side walls 46, 47 of the decorative structure 12. In the illustrated embodiment, the plurality of openings 44 is defined by a grill piece 42 inserted within a notch 66 formed in the first side wall 46. In an alternative embodiment, the plurality of openings 44 may be formed directly within one of the side walls 46, 47 of the structure 12. The number and size of the openings 44 are configured to accommodate a particular flow rate produced by the filter assembly 14.

Referring back to FIG. 7, the outlet 40 of the structure 12 is located at the second end 28 of the decorative structure 12, while the inlet 38 is located adjacent the first end 26 of the structure. In addition, the outlet 40 is located adjacent to one of the side walls (e.g. the second side wall 47) of the structure 12, while the inlet 38 is located at the opposite side wall (e.g. the first side wall 46) of the structure. The relative locations of the structure inlet 38 and the structure outlet 40 create the diagonal circulation of water flow within the aquarium 20, which reduces the occurrence of stagnant water regions.

In particular, the relative locations of the inlet 3 8 and the outlet 40 are such that each of the inlet 38 and outlet 40 are positioned a vertical distance D1 and a horizontal distance D2 from one another. Preferably, the horizontal distance D2 is at least half as great as the vertical distance D1 (each of the distances being defined between centerlines of the inlet and outlet structures). The relative positioning of the structure inlet and outlet 38, 40 generates a side-to-side flow component that creates the diagonal circulation of aquarium water to reduce stagnant regions within the aquarium. In one embodiment, the horizontal distance D2 is between about 5.0 and 6.0 inches and the vertical distance D1 is between about 6.0 and 9.0 inches for an aquarium ranging between 10 and 30 gallons; although the disclosed principles can be applied in a variety of sizes and applications.

Likewise, the filter assembly 14 is typically positioned within the cavity 32 so that the filter assembly inlet 58 is positioned a distance D3 from the structure inlet 38 to create a substantially horizontal flow of water (represented by arrows A in FIG. 7) between the structure inlet 38 and the filter assembly inlet 58. The substantially horizontal flow of water creates a flow vector that contributes to the side-to-side flow component (FIG. 5) of the diagonal circulation (FIG. 1) of aquarium water to reduce stagnant regions within both the cavity 32 and the primary volume 34 of the aquarium 20. In one embodiment, the distance D3 between the structure inlet 38 and the filter assembly inlet 58 is between about 2.0 and 3.5 inches; although the disclosed principles can be applied in a variety of sizes and applications.

The side-to-side flow component produced by the present arrangement 10 reduces stagnant water by creating a circulation within the aquarium that captures and draws a greater percentage of water within its flow than conventional arrangements. As previously described, conventional arrangements create an up and down circulation having a path length within a particular sized aquarium. The path length of the up and down circulation is less than a path length of a diagonal circulation created within that same aquarium. Accordingly, the diagonal circulation having the side-to-side flow component reduces stagnant water within the aquarium by capturing and drawing a greater percentage of water within its flow, as compared to conventional arrangements.

Further, to enhance the diagonal circulation created by the disclosed arrangement 10, the decorative structure 12 preferably has a width W1 (FIG. 5) suited to the size and width W2 of the aquarium 20. As can be understood, the width W1 structurally defines the boundaries of the horizontal distance D2 between the water circulation inlet 38 and the water circulation outlet 40 of the decorative structure 12. In the preferred embodiment, the width W1 of the structure 12 is at least 25% of the width W2 of the aquarium 20.

Referring now to FIGS. 6 and 7, the openings 44 of the structure inlet 38 and the heater 16 are arranged such that water flowing through the inlet 38 is in thermal communication with the heater 16 positioned within the cavity 32 of the structure 12. The openings 44 are located so that a significant majority of the water flow passes across a heating element 48 of the heater 16 prior to filtration. In the illustrated embodiment, the openings 44 are arranged in a generally vertical array to correspond to the elongated construction of the heater element 48. In operation, water is drawn through the plurality of openings 44, across the heating element 48, and into the filter assembly inlet 58.

In the illustrated embodiment, the heater 16 is positioned in close proximity to the filter assembly 14 so that water flowing into the filter assembly 14 is heated immediately prior to entering the filter assembly inlet 58. What is meant by close proximity is that that heater 16 is located closer to the filter assembly inlet 58 than to the structure inlet 38. When positioned in close proximity, the heated water enters the filter assembly inlet 58 for filtration; and both heated and filtered water is returned to the primary volume 34 of the aquarium 20.

Heating the flow of water immediately prior to being drawn into the filter assembly for filtration effectively regulates the temperature of the aquarium water. That is, by returning heated, filtered water to the primary volume 34 of the aquarium 20, and creating a diagonal circulation within the aquarium, the heated, filtered water is better dispersed within the aquarium to provide a more uniform temperature throughout the aquarium. In conventional arrangements, heaters are typically arranged such that water is heated by conduction. The conductively heated water is circulated only by means of the general circulation of the primary volume of the aquarium water. Because the heated water of conventional arrangements is not dispensed into the primary volume of the tank, and is not dispersed by drawing the heated water into a diagonal circulation that reduces stagnant regions, problems of poor temperature regulation and/or water pockets having varying temperatures often arise.

As can be seen in FIG. 4, the decorative structure 12 conceals the filter assembly 14 and heater 16 to enhance the appearance of the aquarium 20. While hidden from view, the filter assembly 14 and heater 16 are still easily accessible because of the configuration of the structure's height H. For example, as shown in FIG. 2, the filter assembly 14 is accessible from the opening 36 at the second end 28 of the structure 12. A person can remove, replace and/or maintenance the filter assembly 14 without immersing one's hands in the aquarium water. Similarly, the heater 16 is accessible from the opening 36 at the second end 28 of the structure 12. A person can adjust the heater 16 without immersing one's hands in the water.

In the illustrated embodiment, the filter assembly 14 is typically mounted to the edge 64 of the aquarium 20 by a bracket (not shown). The structure 12 of the arrangement 10 is preferably sized such that the filter assembly outlet 60 is located at or adjacent to the water circulation outlet 40 when the filter assembly 14 is mounted to the edge 64 of the aquarium 20. The heater 16 may be mounted to the filter assembly 14, to the structure 12, to the aquarium edge 64, or, as shown in the illustrated embodiment in FIGS. 2, 3 and 5, mounted to a divider wall 74.

The divider wall 74 in the illustrated embodiment includes an opening 76 (FIG. 7) through which the heated water flows to enter the filter assembly inlet 58. The divider wall 74 directs the flow of the water so that only water that has been in thermal communication with the heater 16 enters the filter assembly 14. To aid in creating the horizontal flow of water shown in FIG. 7, the opening 76 of the divider wall is located across from (e.g. in approximate horizontal alignment with) the inlet 38 of the structure 12 and the filter assembly inlet 58 of the filter assembly 14.

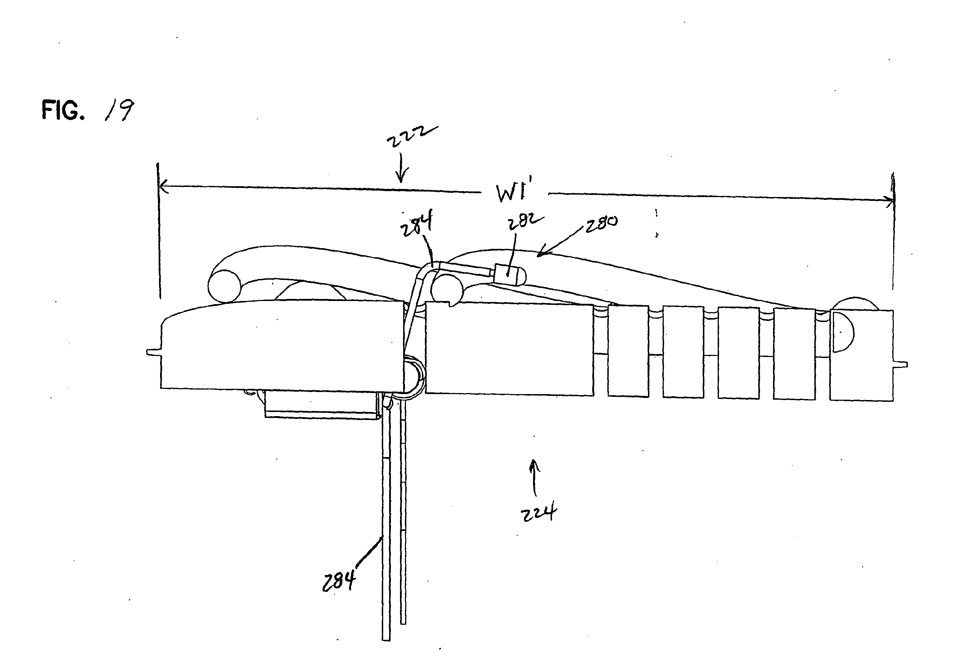

Referring now to FIGS. 3 and 8, the arrangement 10 can further include an aeration device 80. In the illustrated arrangement 10, the aeration device 80 includes an air stone 82 interconnected to an airline 84. The airline 84 extends into the cavity 32 of the structure and through an opening 86 formed in a bottom 90 of the structure 12. The airline is then routed through a channel or slot 88 that extend to the front side 22 of the structure 12. The air stone 82 is porous to permit air from the airline 84 to bubble out of the air stone 82. In the illustrated embodiment of FIGS. 1-8, the air stone 82 is positioned at the front side 22 of decorative structure 12. During operation of the aeration device 80, air bubbles up the front side 22 of the structure 12 to add further interest to the aesthetic appeal of aquarium arrangement 10 while oxygenating the aquarium water.

In use, the aquarium arrangement 10 creates a flow of fluid that effectively circulates water throughout the aquarium to reduce dead spots or stagnant water regions within both the cavity 32 of the structure 12 and the primary volume 34 of the aquarium 20. In conventional arrangements, water can become trapped behind simple backdrop liners, or become stagnant in remote regions of the aquarium. In the disclosed arrangement 10, the filter assembly 14 is positioned to draw water from the primary volume 34, through the water circulation inlet 38 of the structure 12, across the heating element 48 of the heater 16 and into the filter assembly 14. The heated, filtered water is then directed out the water circulation outlet 40 of the structure and dispersed across the water surface of the aquarium 20. The diagonal circulation created by the disclosed arrangement 10 not only reduces stagnant water regions with the aquarium, but even enhances the effectiveness of the filter assembly 14 and the heater 16.

Referring now to FIGS. 9-13, a second embodiment of an aquarium décor arrangement 100 is illustrated. In this embodiment, the aquarium arrangement 100 also includes a decorative structure 112, a filter assembly 114, and a heater 116.

Similar to the previous embodiment, the aquarium arrangement 100 is constructed and arranged such that a diagonal circulation of water flow is created within the aquarium 20 when aquarium water is circulated through the arrangement 100. Likewise, many of the structural features of the aquarium arrangement 100 are similar to that of the previous embodiment.

For instance, referring to FIGS. 9 and 10, the decorative structure 112 has a front side 122 and a back side 124, and a first end 126, a second end 128,. When positioned within an aquarium 20, the first end 126 of the structure 112 rests upon the bottom 30 (FIG. 1) of the aquarium 20. The back side 124 of the decorative structure 112 defines a volume or cavity 132 that is separate from the primary volume 34 (FIG. 1) of the aquarium 20. A top opening 136 at the second end 128 of the structure 112 provides access to the cavity 132 defined by the back side 124 of the structure 112 when the structure 112 is positioned adjacent a back wall 21 of an aquarium 20. The cavity 132 is configured to conceal the filter assembly 114 and the heater 116 when positioned within the cavity.

Referring now to FIGS. 10-12, the decorative structure 112 defines a water circulation inlet 138 and a water circulation outlet 140. The inlet 138 provides fluid communication from the primary volume 34 of the aquarium 20 to the cavity 132 located behind the structure 121. The outlet 140 provides fluid communication from the cavity 132 of the structure 112 to the primary volume 34 of the aquarium 20.

The inlet 138 of the structure 112 includes at least one opening, preferably a plurality of openings 144, formed in one of a first side wall 146 and a second side wall 147 of the decorative structure 12. In the second embodiment, the plurality of openings 144 are defined by a grill piece 142 inserted within a notch 166 (FIG. 10) formed in the first side wall 146.

Referring to FIG. 11, the outlet 140 of the structure 112 is located at the second end 128 of the decorative structure 112, while the inlet 138 is located adjacent the first end 126 of the structure. In addition, the outlet 140 is located adjacent to one of the side walls (e.g. the second side wall 147) of the structure 112, while the inlet 138 is located at the opposite side wall (e.g. the first side wall 146) of the structure.

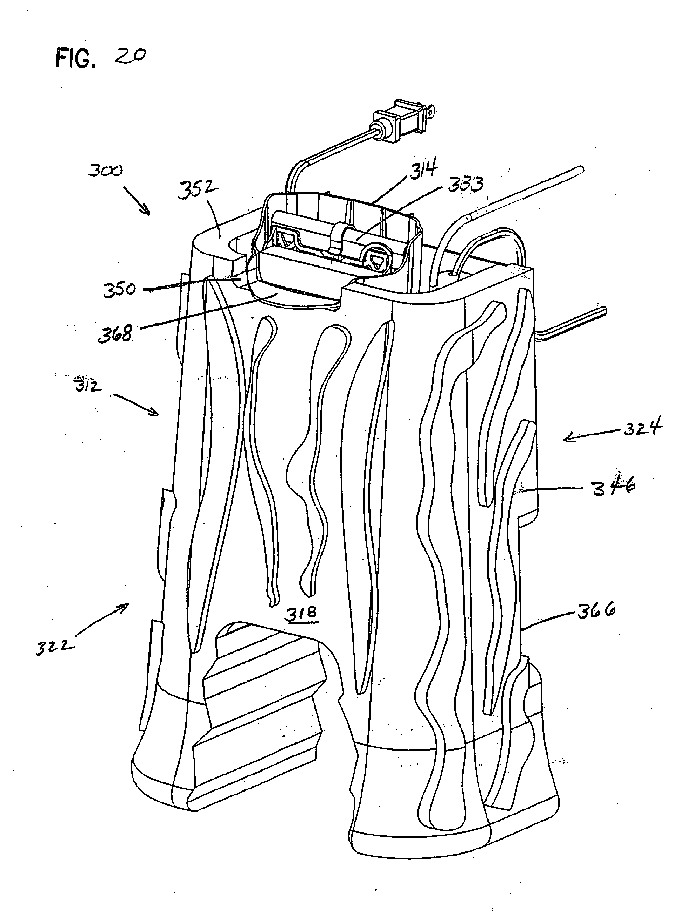

The relative locations of the structure inlet 138 and the structure outlet 140 generate a side-to-side flow component that creates the diagonal circulation of aquarium water to reduce stagnant regions within the aquarium 20. In addition, the filter assembly 114 is typically positioned within the cavity 132 so that a filter assembly inlet 158 (FIG. 12) is positioned a distance from the structure inlet 138 to create a substantially horizontal flow of water between the structure inlet 138 and the filter assembly inlet 158, as previously described.

Still referring to FIG. 12, the heater 116 is positioned in close proximity to the filter assembly 114 so that water flowing into the filter assembly 114 is heated immediately prior to entering the filter assembly inlet 158. Heating the flow of water immediately prior to being drawn into the filter assembly 114 for filtration effectively regulates the temperature of the aquarium water.

Referring now to FIG. 13, the arrangement 100 further includes an aeration device 180. In the illustrated arrangement 100, the aeration device 180 includes an air stone 182 interconnected to an airline 184. The airline 184 extends into the cavity 132 (FIG. 12) of the structure 112 and through an opening 186 formed in a bottom 190 of the structure 112. The airline is then routed through a channel or slot 188 that extend to a secondary chamber 192 formed in the bottom 190 of the structure 12. A plurality of holes 194 is formed adjacent to one of the side walls (e.g. the first side wall 146). The air stone 82 is porous to permit air from the airline 84 to bubble out of the air stone 82 and through the holes 194.

Referring now to FIGS. 14-19, a third embodiment of an aquarium décor arrangement 200 is illustrated. In this embodiment, the aquarium arrangement 200 also includes a decorative structure 212, a filter assembly 214, and a heater 216.

Similar to the previous embodiments, the aquarium arrangement 200 is constructed and arranged such that a diagonal circulation of water flow is created within the aquarium 20 when aquarium water is circulated through the arrangement 200. Likewise, some of the structure features of the aquarium arrangement 200 are similar to that of the previous embodiments.

For example, referring now to FIGS. 14 and 15, the decorative structure 212 of the arrangement 200 has a front side 222 and a back side 224, and a first end 226 and a second end 228. When positioned within an aquarium 20, the first end 226 of the structure 212 rests upon a bottom 30 (FIG. 1) of the aquarium 20. The back side 224 of the decorative structure 212 defines a volume or cavity 232 that is separate from a primary volume 34 (FIG. 1) of the aquarium 20. A top opening 236 at the second end 228 of the structure 212 provides access to the cavity 232 defined by the back side 224 when the structure 212 is positioned adjacent a back wall 21 (FIG. 1) of an aquarium 20. The cavity 232 is configured to conceal the filter assembly 214 and the heater 216 when positioned within the cavity.

Still referring to FIGS. 14 and 15, the decorative structure 212 defines a water circulation inlet 238 and a water circulation outlet 240. The inlet 238 provides fluid communication from the primary volume 34 of the aquarium 20 to the cavity 232 located behind the structure 212. The outlet 240 provides fluid communication from the cavity 232 of the structure 212 to the primary volume 34 of the aquarium 20. The outlet 240 of the structure 212 is generally a location 272 at which water exits the decorative structure 212.

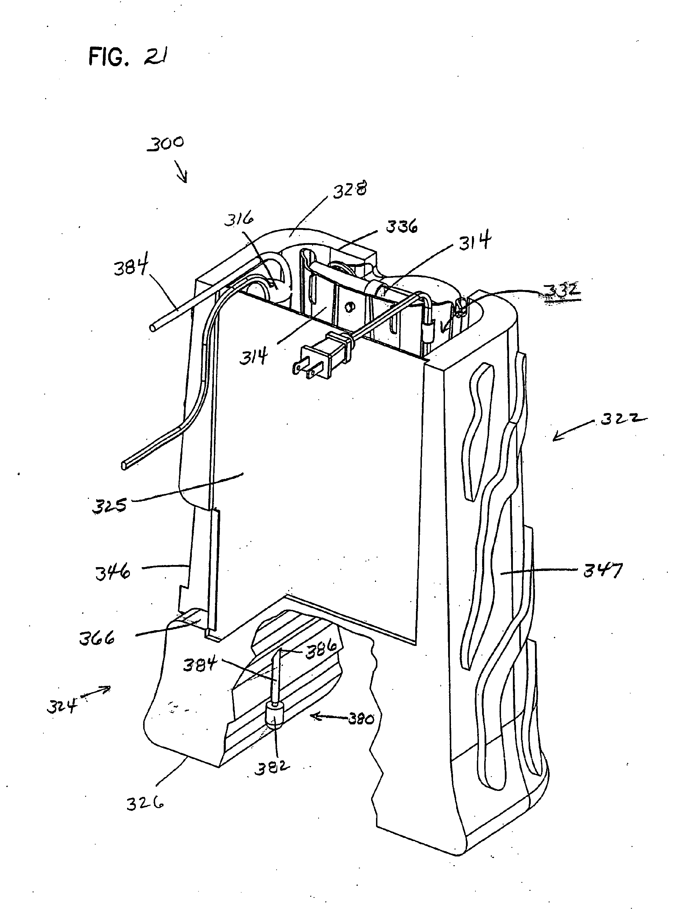

The filter assembly 214 includes a submersible pump 278 (FIG. 15) defining a filter assembly inlet 258 (FIG. 18) and a filter housing 254 defining a filter assembly outlet 260 (FIG. 17). The filter assembly outlet 260 in the illustrated embodiment is a spillway 268. The location 272 at which the spillway 268 is positioned defines the outlet 240 of the decorative structure 212.

Referring now to FIG. 14 and 18, the inlet 238 of the structure 212 includes at least one opening, preferably a plurality of openings 244, formed along a bottom edge 227 of the decorative structure 212. The outlet 240 of the structure 212 is located at the second end 228 of the decorative structure 212, while the inlet 238 is located adjacent the first end 226 of the structure. In addition, the outlet 240 is located on one side of a centerline C-C of the decorative structure 212, while the inlet 238 is located on the other side the centerline C-C of the structure. The relative locations of the structure inlet 238 and the structure outlet 240 create the diagonal circulation of water flow within the aquarium 20 that reduces the occurrence of stagnant water regions.

In particular, the relative locations of the inlet 238 and the outlet 240 are such that each of the inlet 238 and outlet 240 are positioned a vertical distance D1' and a horizontal distance D2' from one another. Preferably, the horizontal distance D2' is at least half as great as the vertical distance D1' (each of the distances being defined between centerlines of the inlet and outlet structures). The relative positioning of the structure inlet and outlet 238, 240 generates a side-to-side flow component that creates the diagonal circulation of aquarium water to reduce stagnant regions within the aquarium.

Similar to the previous embodiments, the decorative structure 212 has a width W1' (FIG. 19) that is at least 25% of the width W2 (FIG. 1) of the aquarium 20. In the illustrated embodiment, the width W1' of the structure 212 is designed to span a majority of the width W2 of the aquarium 20, and may even span the entire width W2 of the aquarium 20 depending upon the size of the aquarium.

Referring back to FIG. 18, the heater 216 is positioned in close proximity to the filter assembly 214 so that water flowing into the filter assembly 214 is heated immediately prior to entering the filter assembly inlet 258. In operation, water is drawn through the plurality of openings 244, across a heating element 248 of the heater 216, and into the filter assembly inlet 258.

As can be seen in FIG. 16, the decorative structure 212 conceals the filter assembly 214 and heater 216 to enhance the appearance of the aquarium 20. While hidden from view, the filter assembly 214 and heater 216 are still easily accessible as previously described.

Also similar to the previous embodiments, the filter assembly 214 is typically mounted to the edge 64 of the aquarium 20 by a bracket (not shown). The structure 212 of the arrangement 10 is preferably sized such that the filter assembly outlet 260 is located at or adjacent to the water circulation outlet 240 when the filter assembly 214 is mounted to the edge 64 of the aquarium 20. The heater 216 may be mounted to the filter assembly 214, to the structure 212, to the aquarium edge 64, or to a divider wall 274 as shown in FIG. 18.

Referring now to FIGS. 16 and 19, the arrangement 200 can further include an aeration device 280. In the illustrated arrangement 200, the aeration device 280 includes an air stone 282 interconnected to an airline 284. The airline 284 extends into the cavity 232 of the structure and through an opening 287 formed in the bottom edge of the decorative structure 212. The air stone 282 is porous to permit air from the airline 284 to bubble out of the air stone 282. In the illustrated embodiment of FIGS. 14-19, the air stone 282 is positioned at the front side 222 of decorative structure 212. During operation of the aeration device 280, air bubbles up the front side 222 of the structure 212 to add further interest to the aesthetic appeal of aquarium arrangement 200 while oxygenating the aquarium water.

Referring now to FIGS. 20-24, a fourth embodiment of an aquarium décor arrangement 300 is illustrated. In this embodiment, the aquarium arrangement 300 also includes a decorative structure 312, a filter assembly 314, and a heater 316.

Referring to FIGS. 20 and 21, the decorative structure 312 of the arrangement 300 has a front side or surface 322 and a back side or surface 324. The front side 322 typically includes features or structures 318 designed to make the aquarium's appearance more natural, beautiful, and enjoyable. The decorative structure 312 has a first end 326 (FIG. 21) and a second end 328. When positioned within an aquarium 20 (FIG. 1), preferably the first end 326 of the structure 312 rests upon the bottom 30 (FIG. 1) of the aquarium 20. The second end 328 of the structure 312 is preferably located above the waterline of the aquarium 20 (FIG. 1) when the first end 326 of the structure 312 rests upon the bottom 30.

In use, the aquarium décor arrangement 300 of the present disclosure is self-standing or self-stabilizing. That is, the arrangement 300 rests upon the bottom 30 of the aquarium without the need for additional securing devices, such as brackets or ties. Each of the filter assembly 314 and the heater 316 mount to or are secured to the decorative structure 312 of the arrangement 300. Therefore, no additional securing devices are needed for these hidden components either. This feature provides a user with greater flexibility in placing and positioning the arrangement within the aquarium so that a variety of aquatic scenes or environments can be created.

In the illustrated embodiment of FIG. 21, a back panel 325 is located at the back side 324 of the decorative structure 312. The back panel 325 extends between opposing first and second side walls 346, 347 of the decorative structure 312. The back side 324 of the decorative structure 312 and the back panel 325 define a volume or cavity 332 that is separate from the primary volume 34 (FIG. 1) of the aquarium 20. In the previous embodiments, the back wall 21 of the aquarium 20 essentially functioned as a back panel to define the cavity. In this embodiment, however, the back panel 325 is provided as a component of the arrangement 300 for use in applications where an enclosed cavity is desired. For example, in some aquarium set-ups, the user may want to position the aquarium décor arrangement at an angle relative to the back wall 21 of the aquarium 20, as opposed to positioning the arrangement flush with the back wall 21. Because the cavity 332 of the embodiment of FIGS. 21-24 is enclosed, the arrangement 300 can be angled relative to the back wall 21 of the aquarium 20, thereby offering greater flexibility in arranging or designing aquarium scenes.

Still referring to FIG. 21, a top opening 336 at the second end 328 of the structure 312 provides access to the cavity 332. Similar to the previous embodiments, the cavity 332 is configured to conceal the filter assembly 314 and the heater 316 when positioned within the cavity, while still providing easy access to the components located therein.

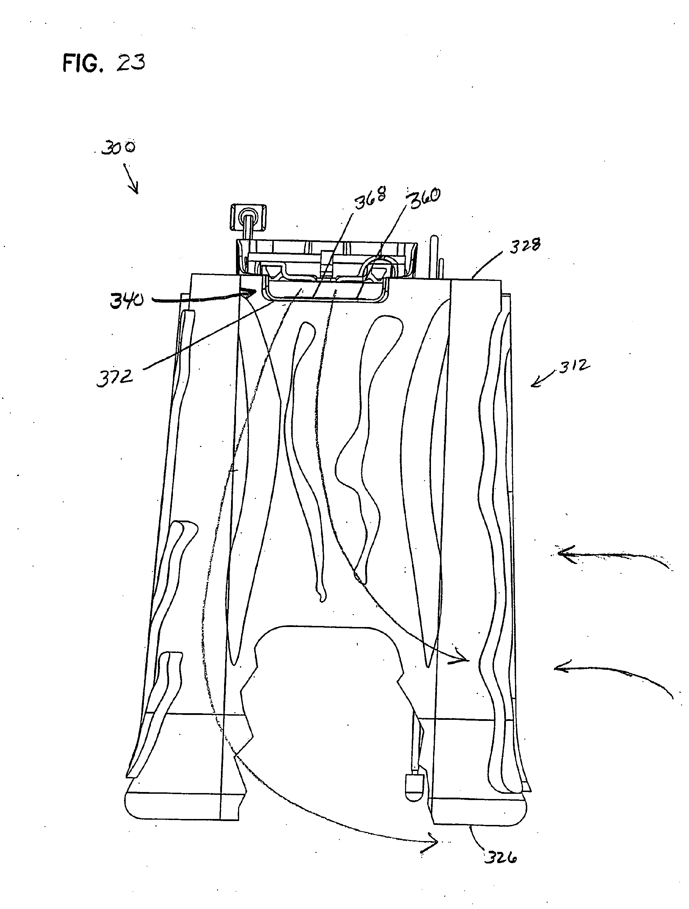

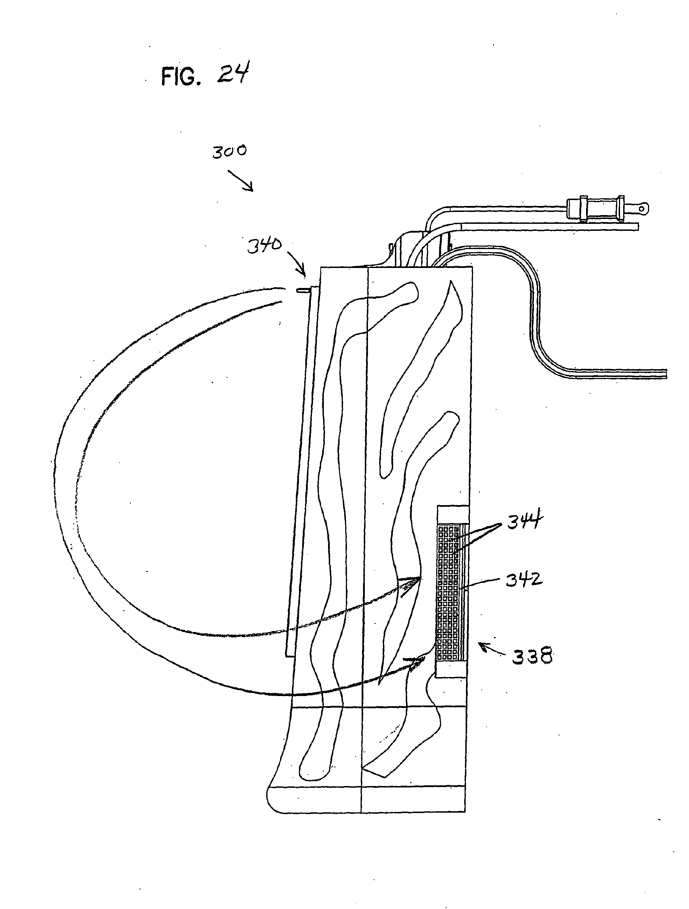

Referring now to FIG. 24, the decorative structure 12 defines a water circulation inlet 338 and a water circulation outlet 340. The inlet 338 provides fluid communication from the primary volume 34 of the aquarium 20 to the cavity 332 of the structure 312. The outlet 340 provides fluid communication from the cavity 332 of the structure 312 to the primary volume 34 of the aquarium 20. The outlet 340 of the structure 312 is generally a location 372 (FIG. 23) at which water exits the decorative structure 312. In other words, the outlet 340 typically is defined by the location 372 at which the filter assembly 314 is positioned, and does not require a particular structurally-defined outlet.

In each of the illustrated embodiments presently disclosed, the water circulation inlet or inlets and the water circulation outlet are offset from one another such that water flows within the cavity in a direction that is non-opposing to any other water flow direction. This feature creates the diagonal circulation within the cavity (e.g., 32, 132, 232, 332) of the structure, and within the primary volume 34 of the aquarium 20. In other words, the outlet (e.g., 40, 140, 240, 340) is offset at a location from all inlet structures (e.g., 38, 138, 238, 338) such that an overall diagonal flow pattern is created from the inlet to the outlet. In contrast, the outlets of conventional arrangements are typically located between and above a number of inlets or openings such that water enters the arrangement from all directions and flows toward the outlet from opposing directions. The opposing horizontal flow vectors of this water flow essentially cancel one another so that the overall aquarium flow pattern created by such an arrangement is an up and down flow pattern.

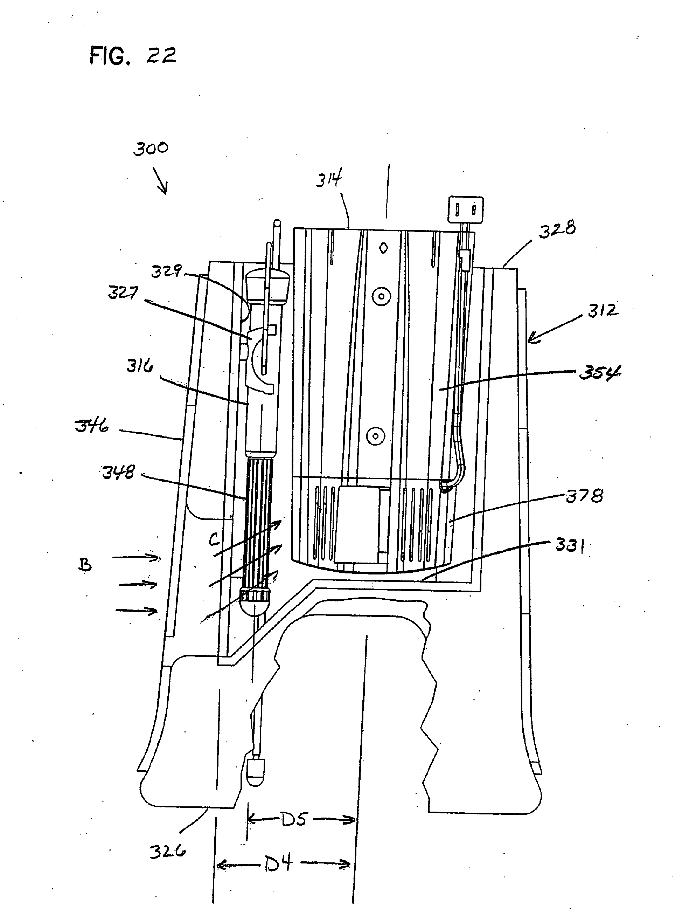

FIG. 22 illustrates the water flow pattern (represented by arrows B and C) of the décor arrangement 300. As shown, all water entering the cavity 332 of the structure 312 flows in a direction that is non-opposed by any other water flow. As previously described, the non-opposed side-to-side flow component of the water flow (shown by arrows B and provided by the horizontal vector of arrows C) creates the diagonal circulation within the aquarium. The diagonal circulation captures and draws a greater percentage of water within its flow, as compared to conventional arrangements, to reduce stagnant water regions within the aquarium.

Referring back to FIG. 24, the inlet 338 of the structure 312 includes at least one opening, preferably a plurality of openings 344, formed in the decorative structure 312. In the illustrated embodiment, the plurality of openings 344 is defined by a grill piece 342 inserted within a notch 366 (FIGS. 20 and 21) formed in the first side wall 346. The notch 366, which defines the inlet 338, and the outlet 340 of the structure 312 are dimensionally located relative to one another as described with respect to FIG. 7 (e.g. D 1 and D2) to create the diagonal circulation of water flow within the aquarium 20 as shown in FIGS. 1 and 5.

Referring again to FIG. 22, the filter assembly 314 generally includes a submersible pump 378 and a filter housing 354. The submersible pump 378 defines the filter assembly inlet, and the filter housing 354 defines a filter assembly outlet 360 (FIG. 23). As shown in FIG. 23, the filter assembly outlet 360 in the illustrated embodiment is a spillway 368.

The location 372 at which the spillway 368 is positioned at least partially defines the outlet 340 of the decorative structure 312. The outlet 340 is also partially defined by a recessed lip 350 (FIG. 20) formed along a top edge 352 of the decorative structure 312; although no particular structurally-defined outlet is required by the present disclosure. The lip 350 is sized to accommodate the spillway 368 of the filter assembly 314. In an alternative embodiment, the recessed lip 350 of the structure 312 may itself define the spillway that dispenses water back into the aquarium while the filter assembly 314 may simply direct the flow of filtered water onto the spillway of the structure 312.

In the illustrated embodiment of FIGS. 20-24, the recessed lip 350 is sized and constructed to support the entire filter assembly 314 without use of additional brackets. In particular, the spillway 368 of the filter assembly 314 simply rests or is captured within the recessed lip 350 of the structure 312, while the remaining filter housing 354 and the pump 378 depend downward into the cavity 332. This mounting arrangement simplifies maintenance of the filter assembly 314 whereby a user need only lift the filter assembly 314 from the recessed lip 350 or set the filter assembly 314 within the recessed lip 350 to detach the filter assembly 314 from or attach the filter assembly to the structure 312.

In other words, the filter assembly 314 is a drop-in or self-contained filter assembly that can be removed from the cavity 332 of the structure for maintenance or other purposes. What is meant by self-contained is that the entire filter assembly, i.e., the submersible pump 378, the filter housing 354, and a filter cartridge 333 positionable with the filter housing are part of a replaceable unit that is separate from the structure 312. The present mounting arrangement also simplifies maintenance of the filter assembly 314 whereby a user can easily access the filter cartridge 333 (FIG. 20) of the filter assembly for periodic maintenance through the top opening 326 of the structure 312 without reaching into the aquarium water.

In an alternative embodiment, the filter assembly 314 may simply rest upon a cavity floor 331 (FIG. 22) such that the spillway 368 of the filter assembly 314 is located generally within the recessed lip 350 of the structure 312. In yet another alternative embodiment, the filter assembly 314 may be mounted to the back panel 325 of the arrangement 300.

Still referring to FIG. 22, the filter assembly 314 is positioned within the cavity 332 to maximize a distance D4 between the filter assembly 314 and the structure inlet 338. In one embodiment, the distance D4 between a centerline of the filter assembly inlet formed in the submersible pump 378 and the structure inlet 338 is between about 3.5 and 5.5 inches; although the disclosed principles can be applied in a variety of sizes and applications. Maximizing the distance between the filter assembly 314 and the structure inlet 338 increases the water flow velocity and contributes to the momentum of the side-to-side flow component and the diagonal circulation (FIG. 1) within the aquarium.

Referring now to FIGS. 22 and 24, the openings 344 of the structure inlet 338 and the heater 316 are arranged such that water flowing through the inlet 338 is in thermal communication with the heater 316. In particular, the openings 344 are located so that a significant majority of the water flow passes across a heating element 348 of the heater 316 prior to filtration. In the illustrated embodiment, the openings 344 are arranged in a generally vertical array to correspond to the elongated construction of the heater element 348. In operation, water is drawn through the plurality of openings 344, across the heating element 348, and into the filter assembly 314.

As shown in FIG. 22, the heating element 348 of the heater 316 is positioned proximate to the pump 378 of the filter assembly 314 so that water flowing into the filter assembly 14 is heated prior to entering the filter assembly inlet. That is, the heater 316 is positioned within the flow pathway, within the cavity 332, between the inlet 338 and the outlet 340 of the structure 312. Preferably the heating element 348 is located a distance D5 of no more than about 5.0 inches; more preferably, no more than about 4.0 inches from the centerline of the filter assembly inlet of the pump 378. By positioning the heater 316 and the filter assembly 314 in the proximate relative locations, both heated and filtered water is returned to the primary volume 34 of the aquarium 20 during operation. By returning heated, filtered water to the aquarium, and creating a diagonal circulation within the aquarium, the heated, filtered water is better dispersed within the aquarium to provide a more uniform temperature throughout the aquarium.

In the illustrated embodiment, the heater 316 is mounted to a bracket 327 located within the cavity 332 of the structure 312. The bracket 327 is secured to an inner side 329 of the first side wall 346 of the structure 312. Preferably, the bracket positions the heater 316 so that controls of the heater can be easily accessed through the top opening 336 of the cavity 332, while the heating element 348 is located between the structure inlet 33 8 and the filter assembly inlet of the pump 378, as previously described.

Referring back to FIG. 21, the arrangement 300 can further include an aeration device 380. In the illustrated embodiment, the aeration device 380 includes an air stone 382 interconnected to an airline 384. The airline 384 extends into the cavity 332 of the structure and through an opening 386 formed adjacent to the first end 326 of the structure 312. The air stone 382 is porous to permit air from the airline 384 to bubble out of the air stone 382. During operation of the aeration device 380, air bubbles up the front side 322 of the structure 312 to add further interest to the aesthetic appeal of aquarium arrangement 300 while oxygenating the aquarium water.

The above specification provides a complete description of the present invention. Since many embodiments of the invention can be made without departing from the spirit and scope of the invention, certain aspects of the invention reside in the claims hereinafter appended.

## Claims

1. An aquarium arrangement for use in an aquarium, the arrangement comprising:
a) a decorative structure having a front side and a back side, the back side defining a cavity, the decorative structure including a structure inlet and a structure outlet, the structure outlet being arranged to dispense water at a location at or above a water level of the aquarium when the structure is positioned within the aquarium;
b) wherein the structure outlet is offset from the structure inlet such that water flows within the cavity in a direction that is non-opposing to any other water flow direction during operation of the pump, thereby creating a diagonal circulation within the aquarium.

2. The arrangement of claim 1; further including a spillway located at the structure outlet of the decorative structure.

3. The arrangement of claim 1, further including a filter assembly positionable within the cavity of the decorative structure, the filter assembly including a submersible pump.

4. The arrangement of claim 3, further including a spillway located at the structure outlet of the decorative structure, the spillway being defined by the filter assembly.

5. The arrangement of claim 3, wherein the filter assembly further includes a replaceable filter cartridge positionable within a filter housing of the filter assembly, the replaceable filter cartridge being accessible from a top opening formed in the decorative structure.

6. The arrangement of claim 2, wherein the filter assembly is a removable self-contained filter unit.

7. The arrangement of claim 1, further including a heater positioned within the cavity of the decorative structure.

8. The arrangement of claim 1, wherein the decorative structure includes a front wall and opposing side walls, the front wall defining the front side of the decorative structure, the inlet structure being formed in one of the opposing side walls of the decorative structure.

9. The arrangement of claim 8, wherein the inlet structure formed in the one opposing side wall is the only inlet structure.

10. The arrangement of claim 8, further including a back panel that extends between the opposing side walls.

11. A decorative arrangement for use in an aquarium, the arrangement comprising:
a) a decorative structure defining a cavity;
b) a filter assembly positioned with the cavity of the decorative structure, the filter assembly including a filter housing and a pump; and
c) a heater positioned within the cavity of the decorative structure and proximate to the filter assembly such that water flowing through the decorative structure is heated prior to filtration;
d) wherein the filter housing of the filter assembly includes a spillway positioned to dispense heated filtered water at a location at or above a water level of the aquarium.

12. The arrangement of claim 11, wherein the heater is positioned no more than about 5.0 inches from the filter assembly.

13. The arrangement of claim 11, wherein the heated filtered water dispensed from the spillway creates a ripple effect upon the water contained within the aquarium.

14. The arrangement of claim 11, wherein the filter assembly is mounted to the decorative structure.

15. The arrangement of claim 14, wherein the spillway of the filter housing mounts at the top edge of the decorative structure.

16. The arrangement of claim 14, wherein the heater is mounted to the decorative structure.

17. The arrangement of claim 11, further including an aeration device arranged such that air bubbles rise up along an exterior surface of the decorative structure during operation of the aeration device.

18. A method of assembling an aquarium arrangement, the method of assembling comprising the steps of:
a) providing a decorative structure having a front side and a back side, the back side defining a cavity, the decorative structure including a structure inlet and a structure outlet;
b) positioning a self-contained filter assembly within the cavity of the decorative structure, the self-contained filter assembly including a filter housing and a submersible pump; and
c) placing the decorative structure within the aquarium such that the structure outlet of the decorative structure is at or above a water level of the aquarium.

19. The method of claim 18, further including positioning a heater within a water flow pathway, created within the cavity, between the structure inlet and the structure outlet.

20. The method of claim 18, wherein the step of positioning the self-contained filter assembly includes positioning the self-contained filter assembly such that a replaceable filter cartridge positionable within the filter housing is accessible to a user without reaching into the water contained within the aquarium.
